# EUROPÄISCHE PATENTSCHRIFT

(11) **EP 2 631 127 B1**
(45) Veröffentlichungstag und Bekanntmachung des Hinweises auf die Patenterteilung: **27.01.2016**
(21) Anmeldenummer: 13153687.2
(22) Anmeldetag: 01.02.2013
(51) Int. Cl.: B60T 1/06, B66F 9/075, F16D 65/18, F16D 121/22

(54) **Flurförderzeug mit gebremsten Lastrollen**
Floor-converyor vehicle with braked load rollers
Chariot de manutention avec rouleaux de charge freinés

(30) Priorität: 27.02.2012 DE 102012101530
(43) Veröffentlichungstag der Anmeldung: 28.08.2013
(73) Patentinhaber: KION Warehouse Systems GmbH, 72760 Reutlingen (DE)
(72) Erfinder: Schiebel, Hans-Jörg, 72127 Kusterdingen (DE); Päselt, Cornelia, 72764 Reutlingen (DE)
(74) Vertreter: Geirhos, Johann

(56) Entgegenhaltungen:
- DE-A1- 10 116 848
- DE-B3- 10 321 570
- GB-A- 2 139 717

## Beschreibung

Die Erfindung betrifft ein Flurförderzeug, insbesondere Kommissionierflurförderzeug mit einem anhebbaren und absenkbaren Fahrerstand, wobei das Flurförderzeug mit einem lenkbaren Antriebsrad und mindestens einer nicht-gelenkten Lastrolle auf einer Fahrbahn abgestützt ist, wobei das Antriebsrad mittels einer Bremseinrichtung versehen ist und die Lastrolle mit einer als elektrisch lösbaren Federspeicherbremse ausgebildeten Bremseinrichtung versehen ist.

Kommissionierflurförderzeuge, beispielsweise Vertikalkommissionierer, weisen einen als Fahrkorb oder Fahrerkabine für eine Bedienperson ausgebildeten, anhebbaren und absenkbaren Fahrerstand auf. An dem Fahrerstand ist hierbei ein Lastaufnahmemittel angeordnet, das beispielsweise von einer in Fahrzeuglängsrichtung angeordneten und von Gabelzinken gebildeten Lastgabel, einer Plattform oder einem Lastträger ausgeführt sein kann. Derartige, als Vertikalkommissionierer ausgebildete Kommissionierflurförderzeuge werden in Regalanlagen für einen Kommissionierbetrieb und Kommissionierarbeiten von Waren aus höheren Regalebenen eingesetzt. Der Fahrerstand kann mit einer Standplattform für eine stehende Bedienperson versehen sein oder mit einem Fahrersitz, beispielsweise einem Klappsitz, um eine Bedienung durch eine sitzende Bedienperson oder einer wahlweise Bedienung im Sitzen oder Stehen zu ermöglichen.

Derartige Flurförderzeuge sind mit einem lenkbaren Antriebsrad und nicht angetriebenen und nicht-gelenkten Lastrollen auf der Fahrbahn abgestützt. An dem Antriebsrad ist eine Bremseinrichtung vorgesehen, die von dem das Antriebsrad antreibenden elektrischen Fahrmotor, der zum Abbremsen des Flurförderzeugs im Generatorbetrieb betrieben wird, und einer Federspeicherbremse, in der Regel einer elektrisch lösbaren Federspeicherbremse gebildet ist. Die über das Antriebsrad erzielbare Bremswirkung ist hierbei durch die Radaufstandskraft am Antriebsrad begrenzt. Um ein verbessertes Bremsvermögen des Flurförderzeugs zu erzielen, ist zusätzlich zu der Bremseinrichtung an dem Antriebsrad an den Lastrollen eine Bremseinrichtung vorhanden. Mit den Bremseinrichtungen an dem Antriebsrad und den Lastrollen kann hierbei eine Betriebsbremse und eine Parkbremse erzielt werden.

Die Bremseinrichtung an den Lastrollen können als hydraulische beaufschlagte Trommelbremse ausgeführt werden. Derartige hydraulisch beaufschlagte Trommelbremsen weisen jedoch aufgrund eines erforderlichen Druckspeichers, eines Steuerventils, der hydraulischen Leitungen und gegebenenfalls erforderlichen Drucksensoren einen hohen Bauaufwand auf. Zudem verursachen derartige als Trommelbremsen ausgebildete Bremseinrichtungen eine hohen Bauaufwand in radialer Richtung, so dass die Verwendung derartiger Bremseinrichtungen in Lastrollen mit einem geringen Außendurchmesser nicht möglich ist.

Zudem ist es bereits bekannt, die Bremseinrichtung an den Lastrollen als elektrisch lösbare Federspeicherbremse auszubilden. Bei bekannten Ausführungen ist die Federspeicherbremse als Baugruppe an dem Fahrzeugkörper befestigt und die Lastrolle auf einem drehfest an dem Fahrzeugkörper befestigten Tragzapfen drehbar gelagert. Um eine Montage der Federspeicherbremse am Fahrzeugkörper und eine anschließende Montage der Lastrolle auf dem Tragzapfen zu ermöglichen, ist der Tragzapfen einseitig an dem Fahrzeugkörper befestigt und die Lastrolle einseitig auf dem frei auskragenden Tragzapfen gelagert. Ein derartiger Aufbau führt jedoch aufgrund der erforderlichen Durchmesser des einseitig auskragenden Tragzapfens zu einem hohen Bauraumbedarf in radialer Richtung, so dass die Verwendung derartiger Bremseinrichtungen in Lastrollen mit einem geringen Außendurchmesser nicht möglich ist. Zudem führt die nacheinandererfolgende Montage des Tragzapfens und der Federspeicherbremse am Fahrzeugkörper und die anschließende Montage der Lastrolle auf dem Tragzapfen zu einem erhöhten Montageaufwand bei der Herstellung des Flurförderzeugs.

Bei als Vertikalkommissionierern ausgebildeten Kommissionierflurförderzeugen mit einem anhebbaren und absenkbaren Fahrerstand befindet sich der Fahrerstand im abgesenkten Zustand oberhalb der Lastrollen. Die bekannten Bremseinrichtungen führen jedoch aufgrund des hohen Bauraumbedarfs für die mit der Bremseinrichtung versehenen Lastrollen in radialer Richtung und dem entsprechenden hohen Außendurchmesser der Lastrollen zu einem hohen Bauraumbedarf unter dem abgesenkten Fahrerstand, so dass eine entsprechend hohe und ergonomisch ungünstige Einstiegshöhe in den Fahrerstand für eine Bedienperson erzielt wird.

Dokument DE 103 21 570 B3 offenbart ein Flurförderzeug gemäß dem Oberbegriff des Anspruchs 1.

Der vorliegenden Erfindung liegt die Aufgabe zugrunde, eine Lastrolle mit einer Bremseinrichtung zur Verfügung zu stellen, die hinsichtlich des radialen Bauraumbedarfs verbessert ist.

Diese Aufgabe wird erfindungsgemäß dadurch gelöst, dass die Lastrolle in einer von zwei seitlich beabstandeten Seitenplatten gebildeten Lagergabel drehbar gelagert ist, wobei in den Lagerplatten ein Tragzapfen beidseitig abgestützt und drehfest befestigt ist, auf dem die Lastrolle mittels einer Radlagerung drehbar gelagert ist, wobei die Federspeicherbremse einen Elektromagnetaktuator aufweist, der auf dem Tragzapfen angeordnet und drehfest befestigt ist. Erfindungsgemäß ist somit der feststehende Tragzapfen in einer von zwei Seitenplatten bestehenden Lagergabel drehfest befestigt und beidseitig abgestützt. Die aus den zwei seitlich beabstandeten Lagerplatten bestehende Lagergabel bildet somit einen Radkasten, in dem der Tragzapfen beidseitig und somit im Bereich beider Enden abgestützt ist. Die beidseitige Abstützung des Tragzapfens in den beiden seitlich beabstandeten Lagerplatten ermöglicht es, den Durchmesser des Tragzapfens zu verringern. Die Anordnung und drehfeste Befestigung des Elektromagnetaktuators auf dem Tragzapfen führt zu einer Anordnung des Elektromagnetaktuators der Federspeicherbremse zwischen den beiden Seitenplatten, wobei die Bremskräfte über den Tragzapfen in die Lagergabel eingeleitet und abgestützt werden. Die Anordnung und Befestigung des Elektromagnetaktuators auf dem Tragzapfen führt zu einer in radialer Richtung kompakten Bauweise der elektrisch lösbaren Federspeicherbremse innerhalb der Lastrolle und ermöglicht den Einbau in Lastrollen mit einem kompakten Außendurchmesser. Bei einem Kommissionierflurförderzeug mit einem anhebbaren und absenkbaren Fahrerstand kann somit bei abgesenktem Fahrerstand eine ergonomisch günstige und niedrige Einstiegshöhe mit den erfindungsgemäßen gebremsten Lastrollen erzielt werden.

Gemäß einer bevorzugten Ausführungsform der Erfindung sind die Federspeicherbremse und die Lastrolle auf dem Tragzapfen vormontiert. Die Befestigung des Elektromagnetaktuators auf dem Tragzapfen ermöglicht es, die Federspeicherbremse und die Lastrolle auf dem Tragzapfen vorzumontieren. Der mit der Lastrolle und der Federspeicherbremse versehene Tragzapfen kann anschließend als vormontierte Baugruppe auf einfache Weise in die Lagergabel eingebaut werden, beispielswiese in nach unten offene und schlitz- bzw. langlochartige Ausnehmungen in den Lagerplatten der Lagergabel, wodurch der Montageaufwand für die mit den Lastrollen und der eingebauten Federspeicherbremse versehenen Tragzapfen an dem Fahrzeugkörper bei der Herstellung des Flurförderzeugs verringert wird.

Gemäß einer bevorzugten Ausführungsform der Erfindung weist die Federspeicherbremse eine axial verschiebbare Ankerscheibe auf, die an dem Elektromagnetaktuator oder an dem Tragzapfen drehfest abgestützt ist.

Die Ankerscheibe wirkt gemäß einer vorteilhaften Ausführungsform der Erfindung mit einer Bremsscheibe zusammen, die an der Lastrolle einstückig ausgebildet oder mit der Lastrolle drehfest verbunden ist. Eine derartige Einscheibenbremse ermöglicht einen günstigen Aufbau, insbesondere wenn die Bremsscheibe einstückig an der Lastrolle ausgebildet und an der Lastrolle direkt angeformt ist.

Gemäß einer bevorzugten alternativen Ausführungsform der Erfindung wirkt die Ankerscheibe mit einem Lamellenpaket zusammen, das abwechselnd mit der Lastrolle und dem Elektromagnetaktuator bzw. dem Tragzapfen drehfest verbundene Lamellen umfasst. Mit einer als Lamellenbremse ausgebildeten Federspeicherbremse kann auf einfache Weise eine hohe Bremskraft an der kompakt bauenden Bremseinrichtung erzielt werden.

Zweckmäßigerweise ist in dem Elektromagnetaktuator eine die Ankerscheibe beaufschlagende Federeinrichtung angeordnet, wodurch bei geringem Bauraumbedarf eine elektrisch lösbare Federspeicherbremse gebildet werden kann.

Gemäß einer Ausgestaltungsform der Erfindung ist die Lastrolle mittels der Radlagerung im Bereich einer Radaußenseite einseitig auf dem Tragzapfen drehbar gelagert, wobei die Radlagerung angrenzend an eine Lagerplatte angeordnet ist, benachbart angrenzend zu der Radlagerung die Ankerscheibe und benachbart angrenzend zu der Ankerscheibe der Elektromagnetaktuator auf dem Tragzapfen angeordnet ist. Eine einseitige Lagerung der Lastrolle auf dem Tragzapfen ermöglicht eine einseitig offene Ausführung der Lastrolle, so dass auf einfache Weise die Ankerscheibe und der Elektromagnetaktuator und somit die Bremseinrichtung innerhalb der Lastrolle angeordnet und auf dem Tragzapfen befestigt werden können.

Gemäß einer vorteilhaften, alternativen Ausgestaltungsform der Erfindung ist die Lastrolle mittels der Radlagerung im Bereich der Radaußenseiten beidseitig auf dem Tragzapfen gelagert, wobei die Radlagerung zwei Radlager umfasst, zwischen denen die Ankerscheibe und der Elektromagnetaktuator angeordnet ist. Eine derartige Anordnung des Elektromagnetaktuators mit der Ankerscheibe und somit der Bremseinrichtung zwischen den beiden Radlagern führt in Verbindung mit der beidseitigen Lagerung der Lastrolle zu einer besonders kompakten Bauweise der gebremsten Lastrolle, da durch die beidseitige Lagerung der Lastrolle eine Verbiegung der Lastrolle unter den Aufstandskräften vermieden werden kann und in der Lösestellung bei geringem Lüftspiel der Federspeicherbremse ein Kontakt der Ankerscheibe mit der Bremsscheibe bzw. dem Lamellenpaket verhindert werden kann.

Eine einfache Ansteuerung des Elektromagnetaktuators ist erzielbar, wenn gemäß einer Ausgestaltungsform der Erfindung an dem Tragzapfen eine Ausnehmung, insbesondere eine Längsnut oder eine Bohrung, zur Führung eines mit dem Elektromagnetaktuator in Verbindung stehenden Ansteuerkabels an die Außenseite einer Seitenplatte ausgebildet ist.

Alternativ kann in dem Elektromagnetaktuator eine Ausnehmung, insbesondere eine Längsnut oder eine Bohrung, zur Führung eines mit dem Elektromagnetaktuator in Verbindung stehenden Ansteuerkabels an die Außenseite einer Seitenplatte ausgebildet werden. Beim Einsetzen des Tragzapfens kann bei einer derartigen Verlegung des Ansteuerkabels in dem Elektromagnetaktuator eine Beschädigung des Ansteuerkabels wirksam vermienden werden.

Um bei einem Ausfall der elektrischen Ansteuerung ein Lösen der Federspeicherbremse zu ermöglichen, ist gemäß einer Weiterbildung der Erfindung eine von mindestens einer Schraube gebildete Notlöseeinrichtung zur manuellen Beaufschlagung der Federspeicherbremse in die Lösestellung vorgesehen, wobei die Schraube mit der Ankerscheibe in Verbindung steht und durch den Elektromagnetaktuator in axialer Richtung hindurchgeführt ist, so dass ein Schraubenkopf der Schraube an der der Ankerscheibe gegenüberliegenden Stirnseite des Elektromagnetaktuators zugänglich ist. Mit derartigen Schrauben kann auf einfache Weise über die Schraubenköpfe die Ankerscheibe mechanisch in die Lösestellung betätigt werden, um ein manuelles Notlösen der Federspeicherbremse zu ermöglichen.

Um die Zugänglichkeit der Schraubenköpfe zu ermöglichen, ist zweckmäßigerweise in der Stirnseite der Lastrolle und/oder in der Seitenplatte der Lagergabel eine Zugangsöffnung zur Betätigung der Schraube ausgebildet.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer Seitenansicht,
- Figur 2: eine erste Ausführungsform einer erfindungsgemäßen Lastrolle mit einer Bremseinrichtung in einem Längsschnitt und
- Figur 3: eine zweite Ausführungsform einer erfindungsgemäßen Lastrolle mit einer Bremseinrichtung in einem Längsschnitt.

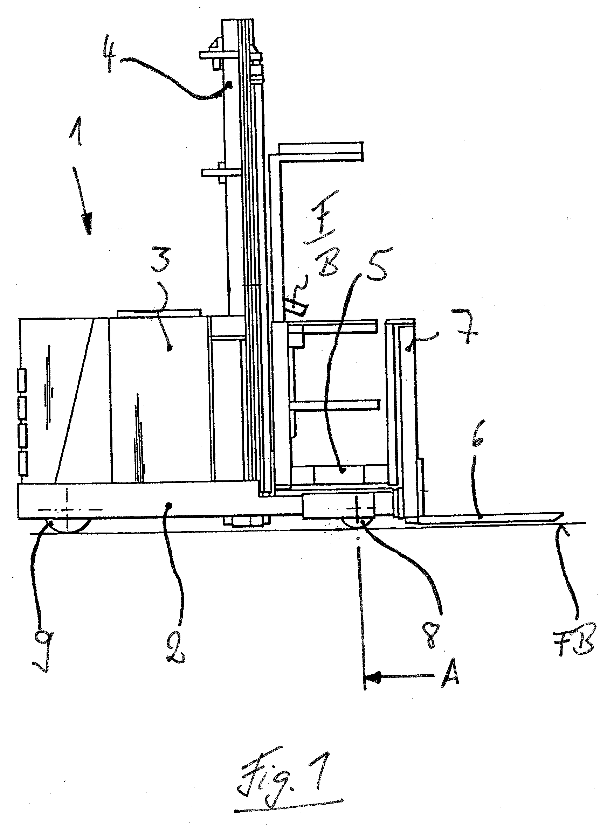

In der Figur 1 ist ein erfindungsgemäßer, beispielsweise als Vertikalkommissionierer ausgebildetes Kommissionierflurförderzeug 1 in einer Seitenansicht als Beispiels eines als Kommissionierflurförderzeugs 1 ausgebildeten Flurförderzeugs dargestellt.

Das als Vertikalkommissionierer ausgebildete Kommissionierflurförderzeug 1 weist einen Fahrzeugkörper mit einem Rahmen 2 auf, in dem ein Batteriefach zur Aufnahme einer beispielsweise als Antriebsbatterie ausgebildeten Energieversorgungseinheit 3 eines batterie-elektrischen Antriebssystems des Flurförderzeugs ausgebildet ist. Das Kommissionierflurförderzeug 1 weist ein von einem Hubgerüst gebildetes Hubwerk 4 auf, an dem ein als Fahrkorb bzw. Fahrerkabine ausgebildeter Fahrerstand 5, der einen Fahrerarbeitsplatz F für eine Bedienperson bildet, mittels eines nicht näher dargestellten Hubantriebs auf- und abbewegbar angeordnet ist. An dem Fahrerstand 5 ist bei dem dargestellten Kommissionierflurförderzeug 1 ein Lastaufnahmemittel 6 befestigt, das im dargestellten Ausführungsbeispiel als Fahrzeuglängsrichtung angeordneten und von Gabelzinken gebildeten Lastgabel ausgebildet ist, die an einen am Fahrerstand 5 angeordneten Hubmast 7 anhebbar und absenkbar angeordnet ist. In dem anhebbaren und absenkbaren Fahrerstand 5 sind die für die Bedienung des Kommissionierflurförderzeugs 1 erforderlichen Steuer- und Bedienelemente angeordnet, beispielsweise in Form einer als Bedienpult ausgebildeten Bedieneinrichtung B.

Das Kommissionierflurförderzeug 1 stützt sich mittels nicht gelenkten und nicht angetriebenen Lastrollen 8, die an einem lastteilseitigen Ende des Rahmens 2 angeordnet ist, und einem lenkbaren Antriebsrad 9, das an einem antriebsteilseitigen Ende des Rahmens 2 angeordnet ist, auf einer Fahrbahn FB ab. Im antriebsteilseitigen Ende des Rahmens 2 ist weiterhin ein nicht näher dargestelltes elektrisches Antriebssystem angeordnet, das einen elektrischen Fahrmotor und einen Lenkantrieb, beispielsweise einen elektrischen Lenkmotor, für das lenkbare Antriebsrad 9 sowie ein elektrisch betriebenes Hydraulikpumpenaggregat umfasst, das zur Versorgung der Arbeitshydraulik vorgesehen ist, die von dem Hubantrieb des Hubwerkes 4 sowie einem Hubantrieb des Hubmastes 7 sowie gegebenenfalls vorhandenen Zusatzantrieben für das Lastaufnahmemittel 6 gebildet sind.

Das Antriebsrad 9 ist mit einer nicht näher dargestellten Bremseinrichtung versehen, die von dem das Antriebsrad 9 antreibenden elektrischer Fahrmotor gebildet ist, der in einem Generatorbetrieb das Flurförderzeug abbremst. Weiterhin kann an dem Fahrmotor bzw. dem Antriebsrad 9 eine lösbare Federspeicherbremse, beispielsweise eine elektrisch lösbare Federspeicherbremse, als Parkbremse angeordnet sein. Die mitlaufenden Lastrollen 8 sind jeweils mit einer elektrisch lösbaren Federspeicherbremse versehen, mit denen die Bremsleitung des Flurförderzeugs erhöht werden kann.

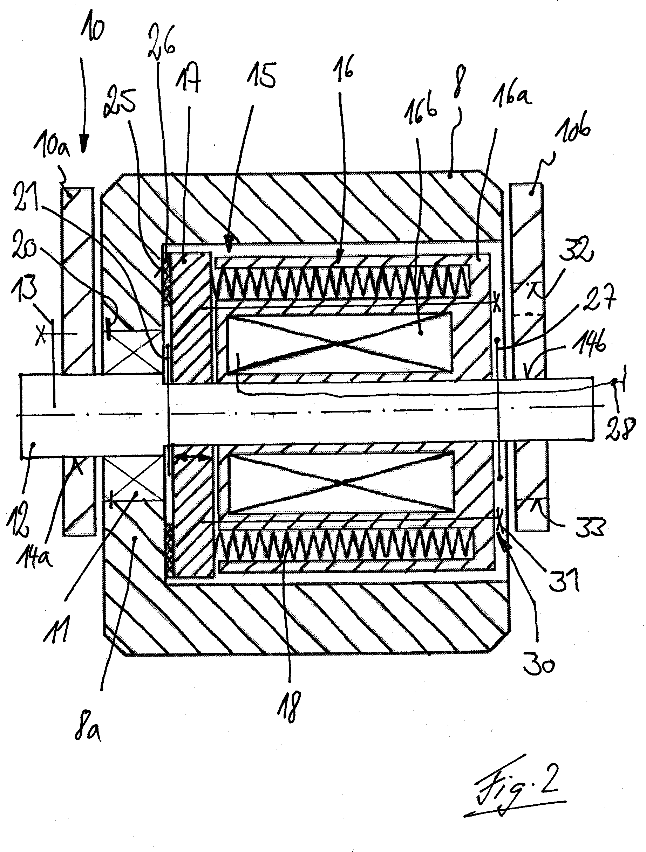

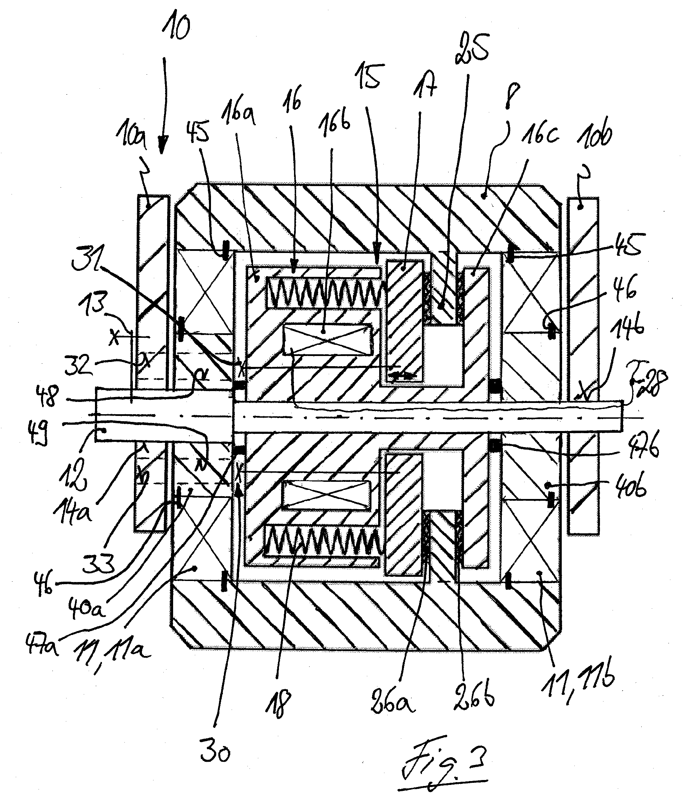

In den Figuren 2 und 3 ist ein Längsschnitt gemäß der Linie A der Figur 1 durch eine erfindungsgemäße gebremste Lastrolle 8 dargestellt, wobei die Figur 2 eine erste Ausführungsform und die Figur 3 eine zweite Ausführungsform einer erfindungsgemäßen gebremsten Lastrolle 8 zeigt.

Die erfindungsgemäße Lastrolle 8 gemäß den Figuren 2 und 3 ist in einer an dem Fahrzeugkörper angeordneten bzw. ausgebildeten Lagergabel 10 drehbar gelagert, die von zwei in Fahrzeugquerrichtung und somit seitlich beabstandeten Seitenplatten 10a, 10b gebildet ist. Die Lastrolle 8 ist mittels einer Radlagerung 11 auf einem Tragzapfen 12 drehbar gelagert, der in den beiden Seitenplatten 10a, 10b beidseitig abgestützt und drehfest sowie axial gesichert befestigt ist. Der Tragzapfen 12 erstreckt sich hierbei durch bohrungsförmige bzw. schlitzartige Ausnehmungen 14a, 14b in den Seitenplatten 10a, 10b und ist mittels einer Sicherungseinrichtung 13 an zumindest einer Seitenplatte 10a drehfest und axial gesichert befestigt. Die Sicherungseinrichtung 13 ist beispielsweise von einer mit dem Tragzapfen 12 in Wirkverbindung stehenden Sicherungsplatte gebildet, die an der Seitenplatte 10a befestigt ist, beispielsweise mittels einer Verschraubung.

Innerhalb der Lastrolle 8 ist eine elektrische lösbare Federspeicherbremse 15 angeordnet, die einen Elektromagnetaktuator 16 umfasst, der auf dem Tragzapfen 12 angeordnet und an dem Tragzapfen 12 drehfest befestigt ist, beispielsweise mittels einer nicht näher dargestellten Passfeder oder einer Keilverzahnung.

Der Elektromagnetaktuator 16 besteht aus einem Metallgehäuse 16a mit einem ringförmigen Elektromagneten 16b, der eine axial verschiebbare Ankerplatte 17 betätigt, die an dem Elektromagnetaktuator 16 oder dem Tragzapfen 12 drehfest befestigt ist.

In dem Elektromagnetaktuator 16 ist weiterhin eine von mehreren Federn gebildete Federeinrichtung 18 angeordnet, die mit der Ankerscheibe 17 in Wirkverbindung steht.

Bei der Ausführungsform der Figur 2 ist die Lastrolle 8 mittels der Radlagerung 11 im Bereich einer Radaußenseite einseitig auf dem Tragzapfen 12 gelagert. Die Lastrolle 8 ist topfartig mit einem einseitig offenen Innenraum ausgeführt, wobei im Bereich einer ersten Stirnseite ein stirnseitiger Steg 8a vorgesehen ist, in dem die Radlagerung 11 angeordnet ist. Die Radlagerung 11 ist mittels einer Sicherungseinrichtung 20, beispielsweise einem Gehäuseabsatz oder eines Sicherungsring, an dem Steg 8a abgestützt und mittels einer Sicherungseinrichtung 21, beispielsweise eines Sicherungsringes oder einer Wellenmutter, an dem Tragzapfen 12 befestigt.

Die in dem Steg 8a angeordnete Radlagerung 11 ist unmittelbar angrenzend an die Lagerplatte 10a angeordnet. Der Steg 8a der Lastrolle 8 bildet mit der inneren Stirnseite eine mit der Ankerplatte 17 zusammenwirkende Bremsscheibe 25 der

Federspeicherbremseinrichtung 15. Die Bremsscheibe 25 der Federspeicherbremseinrichtung 15 ist somit einstückig an der Lastrolle 8 ausgebildet. Zwischen der Ankerscheibe 17 und der Bremsscheibe 25 ist ein Reibbelag 26 angeordnet, der an der Ankerscheibe 17 oder der Bremsscheibe 25 befestigt sein kann.

In axialer Richtung angrenzend und benachbart zur Radlagerung 11 ist die Ankerscheibe 17 in dem einseitig offenen Innenraum der Lastrolle 8 angeordnet. In axialer Richtung angrenzend und benachbart zur Ankerscheibe 17 ist in dem einseitig offenen Innenraum der Lastrolle 8 der Elektromagnetaktuator 16 angeordnet und auf dem Tragzapfen 12 befestigt. Im Bereich der offenen Stirnseite der Lastrolle 8 im Bereich der Lagerplatte 10b ist der Elektromagnetaktuator 16 mittels einer Befestigungseinrichtung 27, beispielsweise eines Sicherungsringes oder einer Wellenmutter, auf dem Tragzapfen 12 in axialer Richtung gesichert.

Bei der Ausführungsform der Figur 3 ist die Lastrolle 8 mittels der Radlagerung 11 im Bereich beider Radaußenseiten beidseitig auf dem Tragzapfen 12 gelagert. Die Stirnseiten der Lastrolle 8 ist an beiden Radaußenseiten von jeweils einem auf dem Tragzapfen 12 drehfest angeordneten Lagereinbauring 40a, 40b gebildet. Die Radlagerung 11 besteht aus zwei Radlagern 11 a, 11 b, die in radialer Richtung jeweils zwischen dem Lagereinbauring 40a, 40b und der Lastrolle 8 angeordnet sind. Die Radlager 11a, 11b sind jeweils mittels einer Sicherungseinrichtung 45, beispielsweise einem Gehäuseabsatz oder eines Sicherungsring, an der Lastrolle 8 abgestützt und mittels einer Sicherungseinrichtung 46, beispielsweise eines Sicherungsringes oder einer Wellenmutter, an dem entsprechenden Lagereinbauring 10a, 40b befestigt.

Bei der Ausführungsform der Figur 3 sind der Elektromagnetaktuator 16, die Ankerscheibe 17 und die Bremsscheibe 25 zwischen den beiden Radlagern 11a, 11 b in die Lastrolle 8 eingebaut. Die Bremsscheibe 25 ist hierbei an der Lastrolle 8 drehfest und axial verschiebbar befestigt, beispielsweise mittels einer Keilverzahnung. Der Elektromagnetaktuator 16 ist weiterhin mit einer Anschlagscheibe 16c versehen, wobei die Bremsscheibe 25 zwischen der Anschlagscheibe 16c und der Ankerscheibe 17 angeordnet ist. Die Bremsscheibe 25 ist hierbei an beiden Stirnseiten mit Reibbelägen 26a, 26b versehen.

Die axiale Sicherung des Elektromagnetaktuators 16 der Figur 3 erfolgt mittels entsprechender Anschlagflächen 47a, 47b an den Lagereinbauringen 40a, 40b. Die Lagereinbauringe 40a, 40b werden durch die Seitenplatten 10a, 10b der den Radkasten bildenden Lagergabel 10 in axialer Richtung gesichert.

Bei den Ausführungsformen der Figur 2 und der Figur 3 ist der Tragzapfen 12 mit einer Ausnehmung versehen, beispielsweise einer in dem Tragzapfen 12 angeordneten Längsbohrung oder einer Längsnut am Außendurchmesser, in der ein mit dem Elektromagnet 16b des Elektromagnetaktuator 16 verbundenes elektrisches Ansteuerkabel 28 an die Außenseite einer Lagerplatte 10a, 10b geführt werden kann.

Alternativ kann eine Kabelführung des Ansteuerkabels durch den Elektromagnetaktuator 16 erfolgen. Bei der Figur 2 kann hierzu eine entsprechende Ausnehmung, beispielsweise einer in dem Elektromagnetaktuator 16 angeordnete Längsbohrung oder einer Längsnut, angeordnet, so dass über eine Ausnehmung in der Seitenplatten 10b das Ansteuerkabel 28 an die Außenseite einer Lagerplatte 10b geführt werden kann. Bei der Figur 3 kann hierzu eine entsprechende Ausnehmung, beispielsweise einer in dem Elektromagnetaktuator 16 angeordnete Längsbohrung oder einer Längsnut, angeordnet, so dass über eine Ausnehmung in dem Lagereinbauring 40b und eine weitere Ausnehmung in der Seitenplatten 10a bzw. 10b das Ansteuerkabel 28 an die Außenseite der Lagerplatte 10a bzw. 10b geführt werden kann.

Mittels der Federeinrichtung 18 wird die Ankerplatte 17 in Richtung der Bremsscheibe 25 in die Bremsstellung der Federspeicherbremse 15 beaufschlagt. Bei einer Ansteuerung des Elektromagneten 16b wird die Ankerplatte 17 entgegen der Kraft der Federeinrichtung 18 in Richtung zu dem Elektromagnetaktuator 16 gezogen und die Federspeicherbremse 15 in die Lösestellung beaufschlagt. Durch eine gesteuerte bzw. geregelte Bestromung des Elektromagneten 16b kann das Bremsmoment der Federspeicherbremse 15 gesteuert bzw. geregelt werden. Zur manuellen Beaufschlagung der Federspeicherbremse 15 in die Lösestellung ist bei den Ausführungsformen der Figur 2 und der Figur 3 eine Notlöseeinrichtung 30 vorgesehen, die von mehreren Schrauben 31, in den dargestellten Ausführungsbeispielen zwei bezüglich der Drehachse der Lastrolle gegenüberliegende Schrauben 31, gebildet ist, die mit einem Gewindeabschnitt in die Ankerplatte 17 eingeschraubt sind. Die Schrauben 31 sind mittels jeweils einer Durchgangsbohrung in axialer Richtung durch den Elektromagnetaktuator 16 hindurchgeführt, so dass die Schraubenköpfe der Schrauben 31 an der der Ankerscheibe 17 gegenüberliegenden Stirnseite des Elektromagnetaktuators 16 zugänglich sind.

Bei der Ausführungsform der Figur 2 sind die Schraubenköpfe der Schrauben 31 an der der Ankerscheibe 17 gegenüberliegenden Stirnseite des Elektromagnetaktuators 16 über die offene Stirnseite der Lastrolle 8 zugänglich. Um bei einer entsprechenden Ausführung der Lagerplatte 10b eine Zugänglichkeit der Schraubenköpfe der Schrauben 31 zu ermöglichen, sind in der Lagerplatte 10b entsprechende Zugangsöffnungen 32, 33 angeordnet, die von entsprechenden Ausnehmungen in der Lagerplatte 10b gebildet sind.

Bei der Figur 3 sind die Schraubenköpfe der Schrauben 31 an der der Ankerscheibe 17 gegenüberliegenden Stirnseite des Elektromagnetaktuators 16 über Zugangsöffnungen 48, 49 in dem die Stirnseite der Lastrolle 8 bildenden Lagereinbauring 40a zugänglich. Um bei einer entsprechenden Ausführung der Lagerplatte 10a eine Zugänglichkeit der Schraubenköpfe der Schrauben 31 über die Zugangsöffnungen 48, 49 zu ermöglichen, sind in der Lagerplatte 10a in Verlängerung der Zugangsöffnungen 48, 49 Zugangsöffnungen 32, 33 angeordnet, die von entsprechenden Ausnehmungen in der Lagerplatte 10b gebildet sind.

Die Lastrolle 8 gemäß der Figur 2 kann hierbei mittels der Radlagerung 11 und der Sicherungseinrichtungen 20, 21 auf dem Tragzapfen 12 montiert werden. Anschließend kann über die offene Stirnseite die Ankerscheibe 17 und der Elektromagnetaktuator 16 der Federspeicherbremse 15 mittels der Befestigungseinrichtung 27 an dem Tragzapfen 12 befestigt werden. Die Federspeicherbremse 15 und die Lastrolle 8 können somit auf dem Tragzapfen 12 vormontiert werden, so dass die aus dem Tragzapfen 12, der Lastrolle 8 und der in die Lastrolle 12 eingebauten Federspeicherbremse 15 bestehende Vormontagebaugruppe bei der Montage des Flurförderzeugs mit geringem Montageaufwand in die Ausnehmungen 14a, 14b der Seitenplatten 10a, 10b, beispielsweise nach unten offene und schlitz- bzw. langlochartige Ausnehmungen 14a, 14b, eingesetzt und in der Lagergabel 10 befestigt werden kann.

Bei der Lastrolle 8 der Figur 3 kann der Elektromagnetaktuator 16, die Ankerscheibe 17 und die Bremsscheibe 25 der Federspeicherbremse 15 auf dem Tragzapfen 12 angeordnet werden und in die Lastrolle 8 eingebaut werden. Anschließend können die mit den Radlagern 11a, 11 b versehenen Lagereinbauringe 40a, 40b auf dem Tragzapfen 12 befestigt werden. Die Federspeicherbremse 15 und die Lastrolle 8 können somit auf dem Tragzapfen 12 vormontiert werden, so dass die aus dem Tragzapfen 12, der Lastrolle 8 und der in die Lastrolle 12 eingebauten Federspeicherbremse 15 bestehende Vormontagebaugruppe bei der Montage des Flurförderzeugs mit geringem Montageaufwand in die Ausnehmungen 14a, 14b der Seitenplatten 10a, 10b, beispielsweise nach unten offene und schlitz- bzw. langlochartige Ausnehmungen 14a, 14b, eingesetzt und in der Lagergabel 10 befestigt werden kann.

Die Erfindung ermöglicht es, mit der elektrisch lösbaren Federspeicherbremse 15 eine selbsttätig wirkende Federspeicherbremse 15 in den Lastrollen 8 zur Verfügung zu stellen, die mittels des Ansteuerkabels 28 elektrisch ansteuerbar ist. Die Lastrollen 8 können hierbei in schmalen von der Lagergabel 10 gebildeten Radkästen an dem Fahrzeugkörper eingebaut werden. Zudem ermöglicht die erfindungsgemäße Lagerung und Abstützung des Tragzapfens 12 in den beiden Seitenplatten 10a, 10b und die Befestigung des Elektromagnetaktuators 16 der Federspeicherbremse 15 auf dem Tragzapfen 12 eine Ausführung der Lastrollen 8 mit einem geringen Außendurchmessern von weniger als 200mm. Bei einem Kommissionierflurförderzeug 1 mit einem anhebbaren und absenkbaren Fahrerstand 5, der sich im abgesenkten Zustand oberhalb der Lastrollen 8 befindet, kann somit mit den erfindungsgemäßen gebremsten Lastrollen 8 aufgrund des geringen möglichen Außendurchmessers der Lastrollen 8 ein geringer Bauraumbedarf unter dem abgesenkten Fahrerstand 5 erzielt werden, der eine niedrige und ergonomisch günstige Einstiegshöhe in den Fahrerstand 5 für eine Bedienperson ermöglicht.

Die Erfindung ist nicht auf die dargestellten Ausführungsbeispiele beschränkt. Die Federspeicherbremse 15 kann anstelle einer einzigen Bremsscheibe 25 als Lamellenbremse ausgeführt werden, die aus mehreren jeweils abwechselnd mit der Lastrolle 8 und dem Elektromagnetaktuator 16 bzw. dem Tragzapfen 12 drehfest verbundenen und axial verschiebbaren Lamellen besteht.

## Patentansprüche

1. Flurförderzeug (1), insbesondere Kommissionierflurförderzeug mit einem anhebbaren und absenkbaren Fahrerstand (5), wobei das Flurförderzeug (1) mit einem lenkbaren Antriebsrad (9) und mindestens einer nicht-gelenkten Lastrolle (8) auf einer Fahrbahn abgestützt ist, wobei das Antriebsrad (9) mittels einer Bremseinrichtung versehen ist und die Lastrolle (8) mit einer als elektrisch lösbaren Federspeicherbremse (15) ausgebildeten Bremseinrichtung versehen ist, wobei die Lastrolle (8) in einer von zwei seitlich beabstandeten Seitenplatten (10a, 10b) gebildeten Lagergabel (10) drehbar gelagert ist, wobei in den Lagerplatten (10a, 10b) ein Tragzapfen (12) beidseitig abgestützt und drehfest befestigt ist, auf dem die Lastrolle (8) mittels einer Radlagerung (11) drehbar gelagert ist, **dadurch gekennzeichnet, dass** die Federspeicherbremse (15) einen Elektromagnetaktuator (16) aufweist, der auf dem Tragzapfen (12) angeordnet und drehfest befestigt ist.

2. Flurförderzeug nach Anspruch 1, **dadurch gekennzeichnet, dass** die Federspeicherbremse (15) und die Lastrolle (8) auf dem Tragzapfen (12) vormontiert sind.

3. Flurförderzeug nach Anspruch 1 oder 2, **dadurch gekennzeichnet, dass** die Federspeicherbremse (16) eine axial verschiebbare Ankerscheibe (17) aufweist, die an dem Elektromagnetaktuator (16) oder an dem Tragzapfen (12) drehfest abgestützt ist.

4. Flurförderzeug nach Anspruch 3, **dadurch gekennzeichnet, dass** die Ankerscheibe (17) mit einer Bremsscheibe (25) zusammenwirkt, die an der Lastrolle (8) einstückig ausgebildet oder mit der Lastrolle (8) drehfest verbunden ist.

5. Flurförderzeug nach Anspruch 3, **dadurch gekennzeichnet, dass** die Ankerscheibe (17) mit einem Lamellenpaket zusammenwirkt, das abwechselnd mit der Lastrolle (8) und dem Elektromagnetaktuator (16) bzw. dem Tragzapfen (12) drehfest verbundene Lamellen umfasst.

6. Flurförderzeug nach einem der Ansprüche 3 bis 5, **dadurch gekennzeichnet, dass** in dem Elektromagnetaktuator (16) eine die Ankerscheibe (17) beaufschlagende Federeinrichtung (18) der Federspeicherbremse (15) angeordnet ist.

7. Flurförderzeug nach einem der Ansprüche 3 bis 6, **dadurch gekennzeichnet, dass** die Lastrolle (8) mittels der Radlagerung (11) im Bereich einer Radaußenseite einseitig auf dem Tragzapfen (12) drehbar gelagert ist, wobei die Radlagerung (11) angrenzend an eine Lagerplatte (10a; 10b) angeordnet ist, benachbart angrenzend zu der Radlagerung (11) die Ankerscheibe (17) und benachbart angrenzend zu der Ankerscheibe (17) der Elektromagnetaktuator (16) auf dem Tragzapfen (12) angeordnet ist.

8. Flurförderzeug nach einem der Ansprüche 3 bis 6, **dadurch gekennzeichnet, dass** die Lastrolle (8) mittels der Radlagerung (11) im Bereich der Radaußenseiten beidseitig auf dem Tragzapfen (12) gelagert ist, wobei die Radlagerung (11) zwei Radlager (11a, 11b) umfasst, zwischen denen die Ankerscheibe (17) und der Elektromagnetaktuator (16) angeordnet ist.

9. Flurförderzeug nach einem der Ansprüche 1 bis 8, **dadurch gekennzeichnet, dass** an dem Tragzapfen (12) eine Ausnehmung, insbesondere eine Längsnut oder eine Bohrung, zur Führung eines mit dem Elektromagnetaktuator (16) in Verbindung stehenden Ansteuerkabels (28) an die Außenseite einer Seitenplatte (10a; 10b) ausgebildet ist.

10. Flurförderzeug nach einem der Ansprüche 1 bis 8, **dadurch gekennzeichnet, dass** in dem Elektromagnetaktuator (16) eine Ausnehmung, insbesondere eine Längsnut oder eine Bohrung, zur Führung eines mit dem Elektromagnetaktuator (16) in Verbindung stehenden Ansteuerkabels (28) an die Außenseite einer Seitenplatte (10a; 10b) ausgebildet ist.

11. Flurförderzeug nach einem der Ansprüche 3 bis 10, **dadurch gekennzeichnet, dass** eine von mindestens einer Schraube (31) gebildete Notlöseeinrichtung (30) zur manuellen Beaufschlagung der Federspeicherbremse (15) in die Lösestellung vorgesehen ist, wobei die Schraube (31) mit der Ankerscheibe (17) in Verbindung steht und durch den Elektromagnetaktuator (16) in axialer Richtung hindurchgeführt ist, so dass ein Schraubenkopf der Schraube (31) an der der Ankerscheibe (17) gegenüberliegenden Stirnseite des Elektromagnetaktuators (16) zugänglich ist.

12. Flurförderzeug nach Anspruch 11, **dadurch gekennzeichnet, dass** in der Stirnseite der Lastrolle (8) und/oder in der Seitenplatte (10a, 10b) der Lagergabel (10) eine Zugangsöffnung (48; 49; 32; 33) zur Betätigung der Schraube (31) ausgebildet ist.

## Claims

1. Industrial truck (1), in particular order-picking truck with a raisable and lowerable driver's stand (5), wherein the industrial truck (1) is supported with a steerable driving wheel (9) and at least one non-steered load roller (8) on an underlying surface, wherein the driving wheel (9) is provided by means of a braking device and the load roller (8) is provided with a braking device designed as an electrically releaseable spring-loaded brake (15), wherein the load roller (8) is mounted rotatably in a bearing fork (10) formed by two laterally spaced-apart side plates (10a, 10b), wherein a supporting journal (12) is supported on both sides and fastened non-rotatably in the bearing plates (10a, 10b), and the load roller (8) is mounted rotatably on the said supporting journal by means of a wheel mounting (11), **characterized in that** the spring-loaded brake (15) has an electromagnetic actuator (16) which is arranged on the supporting journal (12) and is fastened non-rotatably thereto.

2. Industrial truck according to Claim 1, **characterized in that** the spring-loaded brake (15) and the load roller (8) are pre-assembled on the supporting journal (12).

3. Industrial truck according to Claim 1 or 2, **characterized in that** the spring-loaded brake (16) has an axially displaceable armature disc (17) which is supported on the electromagnetic actuator (16) or on the supporting journal (12) for rotation therewith.

4. Industrial truck according to Claim 3, **characterized in that** the armature disc (17) interacts with a brake disc (25) which is formed integrally on the load roller (8) or is connected to the load roller (8) for rotation therewith.

5. Industrial truck according to Claim 3, **characterized in that** the armature disc (17) interacts with a disc pack which comprises discs which are connected in an alternating manner to the load roller (8) and to the electromagnetic actuator (16) or to the supporting journal (12) for rotation therewith.

6. Industrial truck according to one of Claims 3 to 5, **characterized in that** a spring device (18) of the spring-loaded brake (15), which spring device acts on the armature disc (17), is arranged in the electromagnetic actuator (16).

7. Industrial truck according to one of Claims 3 to 6, **characterized in that** the load roller (8) is mounted rotatably on the supporting journal (12) on one side in the region of an outer side of the wheel by means of the wheel mounting (11), wherein the wheel mounting (11) is arranged bordering a bearing plate (10a; 10b), the armature disc (17) is arranged adjacently bordering the wheel mounting (11), and the electromagnetic actuator (16) is arranged on the supporting journal (12) adjacently bordering the armature disc (17).

8. Industrial truck according to one of Claims 3 to 6, **characterized in that** the load roller (8) is mounted on both sides on the supporting journal (12) in the region of the outer sides of the wheel by means of the wheel mounting (11), wherein the wheel mounting (11) comprises two wheel bearings (11a, 11b), between which the armature disc (17) and the electromagnetic actuator (16) are arranged.

9. Industrial truck according to one of Claims 1 to 8, **characterized in that** a recess, in particular a longitudinal groove or a bore, for guiding an activation cable (28), which is connected to the electromagnetic actuator (16), onto the outer side of a side plate (10a; 10b) is formed on the supporting journal (12).

10. Industrial truck according to one of Claims 1 to 8, **characterized in that** a recess, in particular a longitudinal groove or a bore, for guiding an activation cable (28), which is connected to the electromagnetic actuator (16), onto the outer side of a side plate (10a; 10b) is formed in the electromagnetic actuator (16).

11. Industrial truck according to one of Claims 3 to 10, **characterized in that** an emergency release device (30), which is formed by at least one screw (31), is provided for the manual loading of the spring-loaded brake (15) into the release position, wherein the screw (31) is connected to the armature disc (17) and is guided through the electromagnetic actuator (16) in the axial direction such that a screw head of the screw (31) is accessible on that end side of the electromagnetic actuator (16) which is opposite the armature disc (17).

12. Industrial truck according to Claim 11, **characterized in that** an access opening (48; 49; 32; 33) for actuating the screw (31) is formed in the end side of the load roller (8) and/or in the side plate (10a, 10b) of the bearing fork (10).

## Revendications

1. Chariot élévateur (1), en particulier chariot élévateur pour la préparation de colis,
un poste de conducteur (5) apte à être relevé et abaissé,
le chariot élévateur (1) étant soutenu sur une piste de déplacement par une roue directrice d'entraînement (9) et au moins un rouleau non articulé de charge (8),
la roue d'entraînement (9) étant dotée d'un dispositif de freinage et le rouleau de charge (8) étant doté d'un dispositif de freinage configuré comme frein (15) à accumulateur élastique déclenché électriquement,
le rouleau de charge (8) étant monté à rotation dans une fourche de montage (10) formée de deux plaques latérales (10a, 10b) maintenues à distance latérale mutuelle,
un tourillon de support (12) étant soutenu des deux côtés et fixé sans pouvoir tourner dans les plaques de montage (10a, 10b),
le rouleau de charge (8) étant monté à rotation sur le tourillon de support au moyen d'un palier de roue (11),
**caractérisé en ce que**
le frein (15) à accumulateur élastique présente un actionneur (16) à électroaimant disposé sur le tourillon de support (12) et fixé sans pouvoir tourner.

2. Chariot élévateur selon la revendication 1, **caractérisé en ce que** le frein (15) à accumulateur élastique et le rouleau de charge (8) sont pré-montés sur le tourillon de support (12).

3. Chariot élévateur selon les revendications 1 ou 2, **caractérisé en ce que** le frein (16) à accumulateur élastique présente un disque d'induit (17) apte à coulisser axialement et soutenu à rotation solidaire sur l'actionneur (16) à électroaimant ou sur le tourillon de support (12).

4. Chariot élévateur selon la revendication 3, **caractérisé en ce que** le disque d'induit (17) coopère avec un disque de frein (25) formé d'un seul tenant sur le rouleau de charge (8) ou relié à rotation solidaire au rouleau de charge (8).

5. Chariot élévateur selon la revendication 3, **caractérisé en ce que** le disque d'induit (17) coopère avec un paquet de lamelles qui comporte des lamelles reliées à rotation solidaire en alternance au rouleau de charge (8), à l'actionneur (16) à électroaimant et au tourillon de support (12).

6. Chariot élévateur selon l'une des revendications 3 à 5, **caractérisé en ce qu'**un dispositif de ressort (18) du frein (15) à accumulateur élastique qui agit sur le disque d'induit (17) est disposé dans l'actionneur (16) à électroaimant.

7. Chariot élévateur selon l'une des revendications 3 à 6, **caractérisé en ce que** le rouleau de charge (8) est monté à rotation d'un côté sur le tourillon de charge (12) au moyen du palier de roue (11) au niveau du côté extérieur de la roue, le palier de roue (11) étant disposé en position adjacente à une plaque de montage (10a; 10b), le disque d'induit (17) étant disposé au voisinage et en position adjacente au palier de roue (11) et l'actionneur (16) à électroaimant étant disposé sur le tourillon de support (12) au voisinage et en position adjacente au disque d'induit (17).

8. Chariot élévateur selon l'une des revendications 3 à 6, **caractérisé en ce que** le rouleau de charge (8) est monté des deux côtés sur le tourillon de support (12) au moyen du palier de roue (11), au niveau des côtés extérieurs de la roue, le palier de roue (11) comportant deux paliers de roue (11a, 11b) entre lesquels le disque d'induit (17) et l'actionneur (16) à électroaimant sont disposés.

9. Chariot élévateur selon l'une des revendications 1 à 8, **caractérisé en ce qu'**une découpe, en particulier une rainure longitudinale ou un alésage, sont formés sur le tourillon de support (12) pour guider un câble de commande (28) relié à l'actionneur (16) à électroaimant sur le côté extérieur d'une plaque latérale (10a; 10b).

10. Chariot élévateur selon l'une des revendications 1 à 8, **caractérisé en ce qu'**une découpe et en particulier une rainure longitudinale ou un alésage sont formés dans l'actionneur (16) à électroaimant pour guider un câble de commande (28) relié à l'actionneur (16) à électroaimant au côté extérieur d'une plaque latérale (10a; 10b).

11. Chariot élévateur selon l'une des revendications 3 à 10, **caractérisé en ce qu'**un dispositif (30) de déclenchement de secours formé d'au moins une vis (31) est prévu pour agir manuellement sur le frein (15) à accumulateur élastique en position de libération, la vis (31) étant reliée au disque d'induit (17) et traversant l'actionneur (16) à électroaimant dans la direction axiale de telle sorte que la tête de la vis (31) puisse être accessible sur le côté frontal de l'actionneur (16) à électroaimant situé face au disque d'induit (17).

12. Chariot élévateur selon la revendication 11, **caractérisé en ce qu'**une ouverture d'accès (48; 49; 32; 33) permettant d'actionner la vis (31) est formée dans le côté frontal du rouleau de charge (8) et/ou dans les plaques latérales (10a, 10b) de la fourche de montage (10).
